# EUROPÄISCHE PATENTSCHRIFT

(11) **EP 3 854 619 B1**
(45) Veröffentlichungstag und Bekanntmachung des Hinweises auf die Patenterteilung: **16.03.2022**
(21) Anmeldenummer: 21151286.8
(22) Anmeldetag: 13.01.2021
(51) Int. Cl.: B60K 26/00, G05G 1/30

(54) **DOPPELPEDALSYSTEM FÜR EIN FLURFÖRDERZEUG**
DOUBLE PEDAL SYSTEM FOR AN INDUSTRIAL TRUCK
SYSTÈME À DOUBLE PÉDALE POUR UN CHARIOT DE MANUTENTION

(30) Priorität: 21.01.2020 DE 102020200633
(43) Veröffentlichungstag der Anmeldung: 28.07.2021
(73) Patentinhaber: Jungheinrich Aktiengesellschaft, 22047 Hamburg (DE)
(72) Erfinder: Neumann, Gunnar, 20259 Hamburg (DE); Eden, Mario, 24568 Kaltenkirchen (DE); Freygang, Sven, 24568 Kaltenkirchen (DE)
(74) Vertreter: Herzog, Markus

(56) Entgegenhaltungen:
- EP-A2- 1 216 876
- WO-A1-2009/154552
- DE-A1-102007 040 541

## Beschreibung

Die vorliegende Erfindung betrifft ein Doppelpedalsystem für ein Flurförderzeug, umfassend ein erstes und ein zweites federrückgestelltes Pedal, sowie ein Flurförderzeug, welches ein derartiges Doppelpedalsystem umfasst, und ein Verfahren zum Betreiben eines derartigen Doppelpedalsystems.

Neben ebenfalls bekannten Systemen mit lediglich einem Fahrpedal und einem Fahrtrichtungsschalter stellen Doppelpedale ein wesentliches Steuerungskonzept für den Fahrantrieb von Flurförderzeugen im Stand der Technik dar. Insbesondere in Gegengewichtstaplern werden derartige Doppelpedale eingesetzt, mittels welchen ein Fahrer des Flurförderzeugs die Vorwärts- und Rückwärtsfahrt des Flurförderzeugs mithilfe zweier Pedale anweist.

Hierbei ist einerseits ein System bekannt, in welchem sich die beiden Pedale an den Enden einer Wippe befinden, sodass sich eines der beiden Pedale nach oben bewegt, wenn das andere nach unten betätigt wird, und andererseits beispielsweise aus der DE 10 2007 040 541 A1 ein System, in welchem zwei Pedale über ein Getriebe derart miteinander gekoppelt sind, dass jeweils nur eines der Pedale heruntergedrückt werden kann und die beiden Pedalhebel jeweils in eine Neutralstellung vorgespannt sind.

Ferner sei auf die EP 1 216 876 A2 verwiesen, welche ein gattungsgemäßes System lehrt, sowie der Vollständigkeit halber zudem auf die WO 2009/154552 A1.

Wenngleich derartige Pedalkonzepte eine große Verbreitung am Markt gefunden haben, so gelten sie doch unter Anwendern als relativ schwergängig und nicht sonderlich ergonomisch. Weiterhin besteht jedoch ebenfalls der Wunsch, das derart am Markt und bei den Anwendern etablierte System hinsichtlich seiner wesentlichen Betätigungstechnik beizubehalten, um aufwendige Trainings- und Umgewöhnungsprozesse bei den Fahrern entsprechender Flurförderzeuge vermeiden zu können. Zudem ist es wünschenswert, ein verbessertes System hinsichtlich seiner mechanischen Komponenten und Abmessungen relativ ähnlich den bereits etablierten Doppelpedalsystemen auszubilden, um in bestehenden Baureihen von Flurförderzeugen eine einfache Nachrüstung oder eine neue Variante mit einem verbesserten Doppelpedalsystem mit nur geringen konstruktiven Änderungen anbieten zu können.

Zur Lösung dieser Aufgabe sind in dem erfindungsgemäßen Doppelpedalsystem das erste und das zweite federrückgestellte Pedal mechanisch unabhängig voneinander vorgesehen und jeweils mit einer Einrichtung zum elektronischen Erfassen des momentanen Betätigungswegs des entsprechenden Pedals versehen, wobei das Doppelpedalsystem ferner eine Steuereinheit umfasst, welche mit den Einrichtungen zum elektronischen Erfassen der Betätigungswege der beiden Pedale betriebsmäßig gekoppelt und dazu eingerichtet ist, aus den momentanen Betätigungswegen der beiden Pedale einen Fahrsollwert zu bestimmen.

Es ist somit ein Verdienst der Erfinder der vorliegenden Erfindung, erkannt zu haben, dass auf eine mechanische Kopplung der beiden Pedale durch eine Wippe oder ein komplexes mechanisches Kopplungssystem verzichtet werden kann und die Ermittlung des Fahrsollwerts lediglich durch eine Steuereinheit auf Grundlage der jeweiligen momentanen Betätigungswege der beiden Pedale durchgeführt kann. In diesem Zusammenhang ist festzuhalten, dass die erfindungsgemäße Neuerung konform mit allen einschlägigen Normen für Flurförderzeuge ist, insbesondere ISO 3691-1, EN 1175-1, die erwartete Neuerung prEN 1175 und ISO 21281 für Pedale in kraftbetriebenen Flurförderzeugen mit Fahrersitz. Zwar wird insbesondere in der letztgenannten Norm die Geometrie für die Anordnung der Pedale spezifiziert, sowie dass durch das Niederdrücken eines Pedals die Fahrgeschwindigkeit erhöht werden muss, allerdings bei einem Fahrtrichtungswechsel bei sich bewegendem Flurförderzeug die Fahrgeschwindigkeit verringert werden kann. Diese Anforderung erlaubt somit ebenfalls das Abbremsen mit dem zweiten Pedal, wie es durch die Steuereinheit in dem erfindungsgemäßen Doppelpedalsystem bei der Bestimmung des Fahrsollwerts aus den beiden momentanen Betätigungswegen vollzogen werden kann.

Hierbei ist erfindungsgemäß die Steuereinheit dazu eingerichtet sein, den Fahrsollwert mittels einer Differenzbildung zwischen den beiden momentanen Betätigungswegen der Pedale zu bestimmen. Wenngleich diese Differenzbildung ferner noch progressive Parameter abhängig von dem momentanen Betätigungsweg oder eine beliebige Gewichtung zwischen den beiden Betätigungswegen der Pedale umfassen kann, so kann in einem einfachsten Fall eine ungewichtete Differenz zwischen den beiden Betätigungswegen gebildet werden und der so berechnete Wert kann auf einen Fahrsollwert skaliert werden. Hierbei und im Folgenden ist der Begriff des Fahrsollwerts derart zu verstehen, dass die Steuereinheit den in der eben beschriebenen Weise bestimmten Fahrsollwert an eine Antriebsquelle des Flurförderzeugs ausgibt und die Antriebsleistung auf Grundlage dieses Fahrsollwerts eingestellt wird. Hierbei entspricht in der Regel ein größerer Fahrsollwert einer größeren Ausgabeleistung der Antriebsquelle, was wiederum einem größeren Betätigungsweg von lediglich einem der beiden Pedale entspricht.

Da die entsprechenden Flurförderzeuge in der Regel in der Lage sein sollten, in ähnlicher Weise sowohl vorwärts als auch rückwärts zu fahren, kann die Steuereinheit ferner dazu eingerichtet sein, bei der Bestimmung des Fahrsollwerts abhängig von den momentanen Betätigungswegen der beiden Pedale eine Fahrsollrichtung zu bestimmen. Insbesondere kann hierbei eines der beiden Pedale einer Vorwärtsbewegung und das andere einer Rückwärtsbewegung zugeordnet sein. Hierbei entspricht jeweils in der oben beschriebenen Weise ein größerer momentaner Betätigungsweg des entsprechenden Pedals einem größeren Fahrsollwert und damit einer größeren Leistungsausgabe der Antriebsquelle in der jeweiligen Richtung.

Geht man bis hierhin davon aus, dass zu einem beliebigen Zeitpunkt jeweils lediglich eines der beiden Pedale betätigt wird und somit einen positiven momentanen Betätigungsweg aufweist, so kann der entsprechende Zustand im Wesentlichen noch vergleichbar mit den oben beschriebenen Beispielen mit mechanisch miteinander gekoppelten Pedalen betrachtet werden, da dort jeweils lediglich die Betätigung eines einzelnen Pedals mit einer entsprechenden Gegenbewegung des anderen Pedals möglich ist. Da im Gegensatz hierzu nun allerdings in dem erfindungsgemäßen System auch Zustände möglich sind, in welchen beide Pedale einen positiven momentanen Bewegungsweg aufweisen, kann für einen solchen Zustand eine weitere Betriebsart definiert werden, da letztlich ein zusätzlicher Freiheitsgrad für die Eingabe von Anweisungen für den Fahrer geschaffen worden ist, indem er die beiden Pedale mechanisch unabhängig voneinander betätigen kann.

Beispielsweise kann die Steuereinheit demzufolge dazu eingerichtet sein, bei einer gleichzeitigen Auslenkung beider Pedale, das heißt bei einem positiven momentanen Betätigungsweg der beiden Pedale, einen Vorgang zur Verringerung des Geschwindigkeitsbetrags des Flurförderzeugs anzuweisen. Auf diese Weise kann zusätzlich zu der angesprochenen Differenzbildung zwischen den beiden momentanen Betätigungswegen zur Bestimmung eines Fahrsollwerts zum Anweisen einer Antriebsquelle auch noch ein weiterer Parameter aus der Betätigung der beiden Pedale abgeleitet werden, beispielsweise ein Anweisungsbetrag für eine von der Antriebsquelle unabhängige Bremsvorrichtung des Flurförderzeugs. Alternativ könnte auch bei einem Feststellen einer gleichzeitigen Betätigung der beiden Pedale die Antriebsquelle sofort außer Betrieb genommen werden und lediglich ein Bremsvorgang durchgeführt werden, dessen Intensität erneut aus den momentanen Betätigungswegen der beiden Pedale abgeleitet werden kann, beispielsweise eine Vollbremsung bei einem vollständigen Durchtreten beider Pedale zur gleichen Zeit und ein entsprechend herunterskaliertes Abbremsen bei einem geringeren Betätigungsweg der beiden Pedale.

Wie bereits angedeutet, betrifft die vorliegende Erfindung in einem zweiten Aspekt ein Flurförderzeug, insbesondere ein elektrisch betriebenes Flurförderzeug, umfassend einen Fahrersitz und in einem Fußraum vor dem Fahrersitz angebracht ein erfindungsgemäßes Doppelpedalsystem, wobei die Steuereinheit des Doppelpedalsystems mit einer Steuereinrichtung eines Antriebsmotors des Flurförderzeugs betriebsmäßig gekoppelt oder mit ihr integriert ist. Hierbei sind verschiedene Ausgestaltungen denkbar, wie sich die Steuereinheit des Doppelpedalsystems und die Steuereinrichtung des Antriebsmotors zueinander verhalten könnten, beispielsweise kann eine einzelne zentrale Steuervorrichtung des Flurförderzeugs die Aufgaben von sowohl der Steuereinheit des Doppelpedalsystems, also insbesondere das Bestimmen des Fahrsollwerts aus den momentanen Betätigungswegen der beiden Pedale, als auch die typischen Aufgaben einer Steuereinrichtung des Antriebsmotors des Flurförderzeugs übernehmen, während in einer anderen Ausführungsform die Steuereinheit des Doppelpedalsystems beispielsweise als relativ leistungsarme integrierte Mikroprozessorschaltung aufgebaut sein kann, die lediglich in Echtzeit die Verarbeitung der beiden Betätigungswege der Pedale zu einem Fahrsollwert und dessen anschließende Weitergabe an eine separat ausgebildete Steuereinrichtung des Antriebsmotors übernimmt.

Da die beiden Pedale des erfindungsgemäßen Doppelpedalsystems in dem angesprochenen Flurförderzeug in der Regel mit den beiden Füßen des Fahrers des Flurförderzeugs betätigt werden sollen, kann zweckmäßigerweise das erste der beiden Pedale auf der rechten Seite bezüglich einer Längs-Mittelachse des Fahrersitzes und das zweite der beiden Pedale auf der linken Seite bezüglich einer Längs-Mittelachse des Fahrersitzes vorgesehen sein. Hierbei kann der Fahrersitz selbst gegenüber der Mittelachse in Längsrichtung des Flurförderzeugs in einer Breitenrichtung davon versetzt sein.

Um die anatomische Eignung dieser Anordnung der beiden Pedale noch weiter zu verbessern, können sie jeweils derart schräg bezüglich der Längs-Mittelachse des Fahrersitzes angeordnet sein, dass sie sich in Richtung weg von dem Fahrersitz auch weg von der Längs-Mittelachse erstrecken. Somit öffnen die beiden Pedale zwischen einander vom Fahrersitz gesehen aus einen Winkel, der anhand weiterer konstruktiver Parameter des Flurförderzeugs in ergonomisch optimaler Weise gewählt werden kann.

Weiterhin kann das Flurförderzeug eine Vorrichtung zum induktiven Abbremsen umfassen, wobei die Steuereinheit des Doppelpedalsystems und die Vorrichtung zum induktiven Abbremsen derart zusammenwirken, dass bei einer gleichzeitigen Auslenkung beider Pedale die Vorrichtung zum induktiven Abbremsen betätigt wird.

Gemäß einem dritten Aspekt betrifft die vorliegende Erfindung ein Verfahren zum Betreiben eines erfindungsgemäßen Doppelpedalsystems, umfassend die Schritte eines Erfassens der momentanen Betätigungswege der beiden Pedale und eines Bestimmens eines Fahrsollwerts aus den momentanen Betätigungswegen der beiden Pedale.

Weiterhin kann das erfindungsgemäße Verfahren in der oben bereits angedeuteten Weise bei der Bestimmung des Fahrsollwerts aus den momentanen Betätigungswegen der beiden Pedale ferner ein Bestimmen einer Fahrsollrichtung umfassen.

Wie ebenfalls bereits angedeutet, kann das Bestimmen des Fahrsollwerts ein Ermitteln einer Differenz zwischen den beiden Betätigungswegen der Pedale und ein Skalieren der ermittelten Differenz hinsichtlich einer maximal abrufbaren Antriebsleistung des Flurförderzeugs umfassen.

Weitere Merkmale und Vorteile der vorliegenden Erfindung werden aus der nachfolgenden Beschreibung einer Ausführungsform davon deutlich, wenn diese zusammen mit den beiliegenden Figuren betrachtet wird. Die Figuren zeigen im Einzelnen:
- Fig. 1: eine isometrische Ansicht eines erfindungsgemäßen Flurförderzeugs;
- Fig. 2a und 2b: eine isometrische Ansicht sowie eine Druntersicht des Doppelpedalsystems des Flurförderzeugs aus Figur 1;
- Fig. 3: ein Flussdiagramm des Betriebsverfahrens des Doppelpedalsystems des Flurförderzeugs aus Figur 1; und
- Fig. 4: zeitliche Verlaufskurven, welche den Betrieb des Doppelpedalsystems des Flurförderzeugs aus Figur 1 illustrieren.

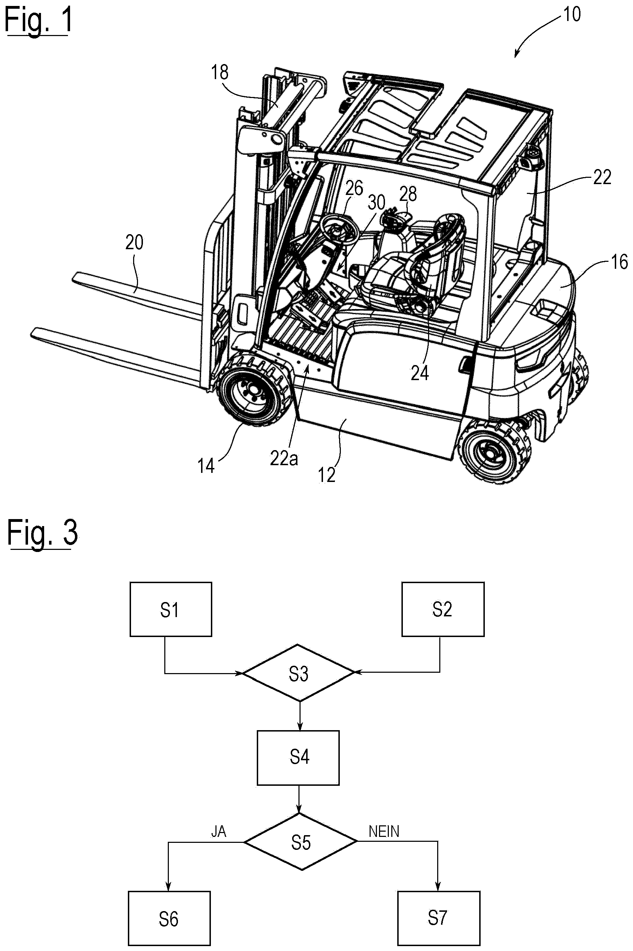

In Figur 1 ist zunächst ein erfindungsgemäßes Flurförderzeug in einer isometrischen Darstellung gezeigt und ganz allgemein mit dem Bezugszeichen 10 bezeichnet. Dieses Flurförderzeug 10 ist als Gegengewicht-Gabelstapler ausgeführt und umfasst übliche Komponenten wie einen Fahrzeugkörper 12, Räder 14, ein Gegengewicht 16, welches intern in Figur 1 nicht dargestellte Komponenten wie einen Antriebsmotor, eine Lenkung, Hydraulikkomponenten, eine Steuervorrichtung und gegebenenfalls einen Akkumulator aufnimmt, ein Hubgerüst 18 mit einem daran in vertikaler Richtung verfahrbaren Lastaufnahmemittel 20 in Form einer Gabel und eine Fahrerkabine 22.

In der Fahrerkabine 22 ist wiederum ein Fahrersitz 24 vorgesehen, auf dem ein Fahrer des Flurförderzeugs 10 in seinem Betrieb Platz nimmt und von wo aus er verschiedene Bedienelemente mit seinen Händen und Füßen betätigen kann. Diese Bedienelemente umfassen zum einen ein Lenkrad 26 und einen Piloten 28, die zum Lenken des Flurförderzeugs 10 bzw. zum Bedienen von Hydraulikkomponenten, wie beispielsweise der Hubfunktion den Hubgerüsts 18, vom Fahrer des Flurförderzeugs 10 mit seiner linken bzw. rechten Hand bedient werden können.

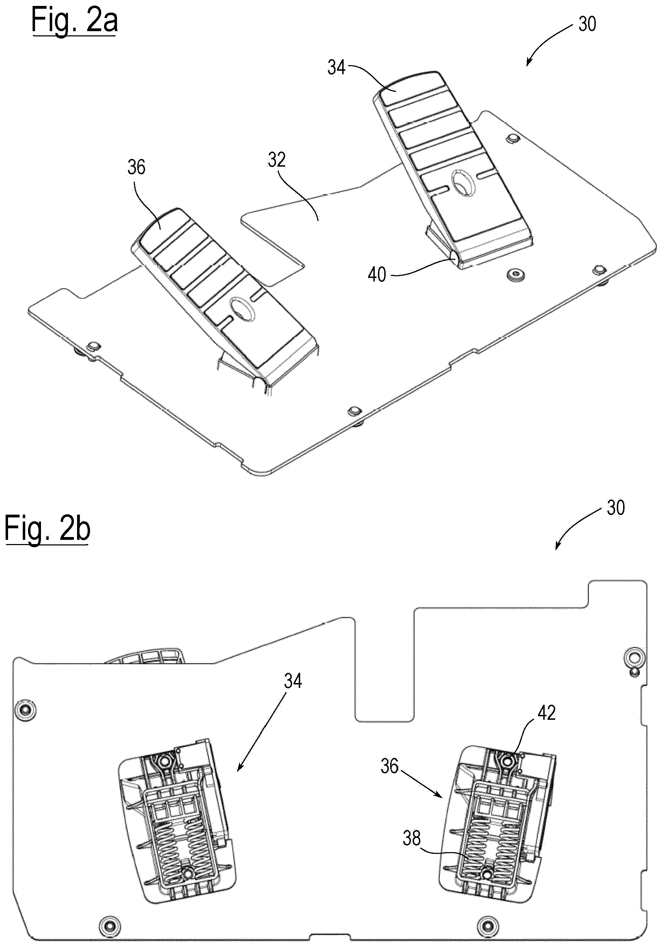

Zum anderen befindet sich im Fußraum 22a vor dem Fahrersitz 24 ein erfindungsgemäßes Doppelpedalsystem 30, das im Folgenden zunächst einmal unter Bezugnahme auf die Figuren 2a und 2b detaillierter beschrieben werden wird. Hierbei zeigt Figur 2a das Doppelpedalsystem 30 in einer isometrischen Draufsicht, wobei an einer Bodenplatte 32 ein rechtes 34 und ein linkes 36 Pedal in einer derartigen Weise angelenkt sind, dass sie sich jeweils in Richtung von dem Fahrersitz 24 weg schräg nach außen bezüglich der Längs-Mittelachse des Fahrersitzes 24 erstrecken, um so eine optimale anatomische Position für den Fahrer des Flurförderzeugs 10 gewährleisten zu können.

Sowohl aus der isometrischen Ansicht in Figur 2a als aus der Druntersicht in Figur 2b ist zu erkennen, dass zwischen den beiden Pedalen 34 und 36 keinerlei mechanische Kopplung vorliegt, sodass diese Pedale 34 und 36 völlig unabhängig voneinander betätigt werden können. Insbesondere sind die beiden Pedale 34 und 36 im Wesentlichen baugleich ausgestaltet und durch jeweilige Spiralfedern 38 in Richtung einer oberen Endstellung vorbelastet, die einem momentanen Betätigungsweg von Null entspricht.

Gegen die Wirkung dieser Spiralfedern 38 kann nun der Fahrer des Flurförderzeugs 10 eine Fußkraft ausüben, die zu einer Schwenkbewegung des entsprechenden Pedals 34 bzw. 36 um eine jeweilige Anlenkachse 40 führt. Die Auslenkung des jeweiligen Pedals 34 bzw. 36 aus seiner Nullstellung, das heißt sein momentaner Betätigungsweg, wird mittels einer jeweiligen geeigneten Einrichtung 42 zum elektronischen Erfassen des entsprechenden Pedals 34 bzw 36 detektiert, wobei die Einrichtungen 42 beispielsweise einen optischer Sensor oder ein Drehpotentiometer umfassen können.

Die von den beiden Einrichtungen 42 ausgegebenen und den jeweiligen momentanen Betätigungsweg repräsentierenden Signale werden an eine nicht dargestellte Steuereinheit drahtgebunden oder drahtlos ausgegeben, die anhand dieser beiden momentanen Betätigungswege einen Fahrsollwert für das Flurförderzeug 10 bestimmt und dann an eine Steuereinrichtung eines Antriebsmotors des Flurförderzeugs 10 ausgibt, um diesen entsprechend der Betätigung der Pedale 34 und 36 durch den Fahrer des Flurförderzeugs 10 zu betreiben.

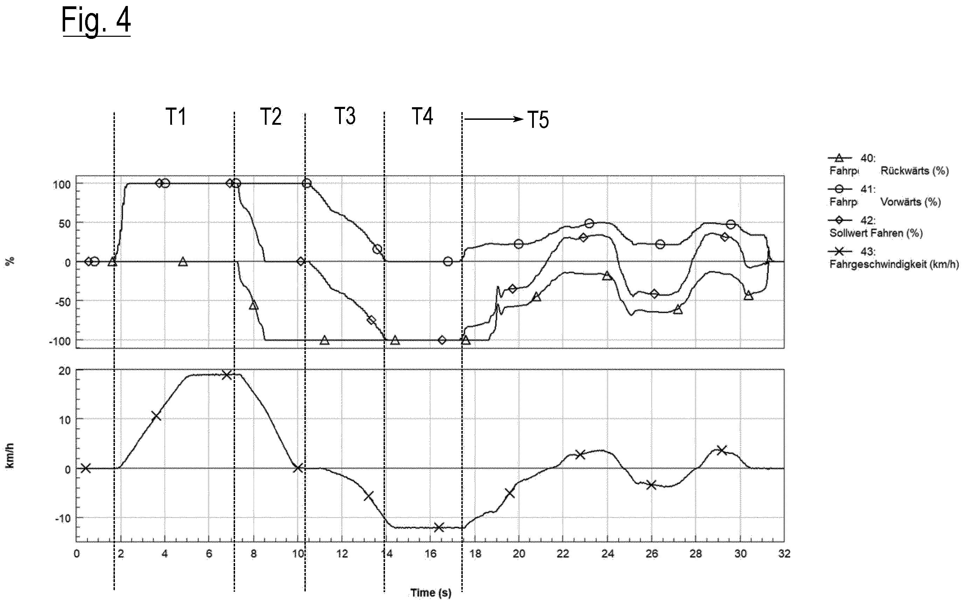

Hierbei zeigen das Flussdiagramm aus Figur 3 sowie der zeitliche Verlauf aus Figur 4 das Funktionsprinzip des Betriebsverfahrens, das von der eben angesprochenen Steuereinheit durchgeführt wird. Zunächst einmal wird unter Bezugnahme auf Figur 3 bei den Schritten S1 und S2 wie angesprochen von den beiden Einrichtungen 42 zum elektronischen Erfassen der momentanen Betätigungswege der beiden Pedale 34 bzw. 36 ein jeweiliger erfasster Wert ausgegeben, wobei die beiden erfassten Werte bei Schritt S3 von der Steuereinheit subtrahiert werden.

Im vorliegenden Fall soll in dem Ausführungsbeispiel eine einfache Subtraktion der beiden Werte ohne weitere Gewichtung oder dynamische Skalierung stattfinden. Insbesondere soll das rechte Pedal 34 entsprechend im Schritt S1 einer Bewegung vorwärts entsprechen und das linke Pedal 36 entsprechend im Schritt S2 einer Bewegung rückwärts. Für den im Schritt S3 ermittelten Wert S4 wird nun eine Fallunterscheidung durchgeführt, ob dieser Wert größer oder kleiner als Null ist. Diese Fallunterscheidung im Schritt S5 führt bei einem Ergebnis "Ja" zu einer Fahrt vorwärts, wobei der ermittelte Betrag des Fahrsollwerts aus Schritt S4 eine Skalierung für die maximal zur Verfügung stehende Antriebsleistung in Schritt S6 darstellt. In ähnlicher Weise wird bei einer Ermittlung von "Nein" im Schritt S5 eine Fahrtrichtung rückwärts bei Schritt S7 ermittelt, wobei erneut der Betrag der Differenz aus Schritt S3, das heißt der Fahrsollwert aus S4, eine Skalierung für eine maximale Antriebsleistung in Richtung rückwärts darstellt.

Zuletzt sei unter Bezug auf Figur 4 ein beispielhafter Fahrvorgang des Flurförderzeugs 10 aus Figur 1 anhand zweier Graphen von zeitlichen Verläufen erläutert, wobei der obere Graph die jeweiligen momentanen Betätigungsmengen der beiden Pedale 34, 36 sowie den entsprechenden als Differenz dieser beiden Werte bestimmten Fahrsollwert zeigt, während der untere Graph den Geschwindigkeitsverlauf des Flurförderzeugs 10 über der Zeit darstellt.

Hierbei sollen fünf Zeiträume T1 bis T5 betrachtet und im Folgenden beschrieben sein. Ferner sei darauf hingewiesen, dass im oberen der beiden Graphen die Kurve mit einem Prozentwert von gleich oder größer 0 einer der entsprechenden Auslenkung des rechten Pedals 34 entsprechend einer Anweisung für eine Fahrt in Richtung vorwärts entspricht, während die Kurve mit einem Prozentwert von kleiner oder gleich 0 einer Auslenkung des linken Pedals 36 entsprechend einer Anweisung für eine Fahrt in Richtung rückwärts entspricht.

Im Zeitraum T1 wird somit zunächst lediglich das rechte Pedal 34 relativ rasch um seinen vollen maximalen Betätigungsweg ausgelenkt, während das linke Pedal 36 unbetätigt verbleibt, sodass der Fahrsollwert in gleicher Weise analog zum Auslenkungswert des rechten Pedals 34 auf 100 Prozent ansteigt. Dementsprechend wird eine maximale Ausgabeleistung vom Motor des Flurförderzeugs 10 in Richtung vorwärts angefordert, was zu einer Beschleunigung bis zur Maximalgeschwindigkeit des Fahrzeugs 10 in etwa 5 Sekunden und einer anschließenden Fahrt bei Maximalgeschwindigkeit für den Rest des Zeitraums T1 führt. Anschließend wird während der Zeitdauer T2 das rechte Pedal 34 weiterhin bei seiner maximalen Betätigungsmenge gehalten, während zusätzlich das linke Pedal 36 sukzessive bis zu seiner vollen Auslenkung betätigt wird. Dementsprechend geht in gleichem Maße, wie die Betätigung des linken Pedals 36 zunimmt, der Betrag der Differenz der beiden Betätigungswege auf null zurück, sodass die vom Antriebsmotor des Flurförderzeugs 10 angeforderte Leistung auf Null zurückgeht und das Flurförderzeug 10 dementsprechend verlangsamt, bis es zum Stillstand kommt. Gegebenenfalls kann hierbei bei einer gleichzeitigen Betätigung beider Pedale 34 und 36 zusätzlich eine vom Antriebsmotor des Flurförderzeugs 10 unabhängige Bremsvorrichtung zugeschaltet werden, beispielsweise eine Induktionsbremse.

Im Zeitraum T3 wird dann die Betätigung des rechten Pedals 34 sukzessive zurückgenommen, während die Betätigung des linken Pedals 36 weiterhin bei 100 Prozent gehalten wird. Dementsprechend sinkt auch der Fahrsollwert sukzessive bis zu einem negativen Maximalwert am Ende der Zeitdauer T3 ab. Demzufolge beginnt das Flurförderzeug 10 mit einer zunehmenden Beschleunigung rückwärts zu fahren, wie durch den Geschwindigkeitsverlauf in der Zeitperiode T3 dargestellt ist.

Zu Beginn der Zeitdauer T4 ist dann einerseits der Fahrsollwert bei einem Wert von minus 100 Prozent angelangt und andererseits das Flurförderzeug 10 bei seiner Maximalgeschwindigkeit in Richtung rückwärts, die allerdings geringer ist als die Maximalgeschwindigkeit in Richtung vorwärts, wie sie am Ende der Zeitdauer T1 erreicht worden ist.

Anschließend sind in der Zeitdauer T5 ausgehend von dem am Ende der Zeitdauer T4 vorliegenden maximalen Betätigungsweg des linken Pedals 36 und dem unbetätigten Zustand des rechten Pedals 34 feinfühlige Änderungen der beiden Betätigungswege der Pedale 34 und 36 gezeigt, die ausgehend von der schnellen Rückwärtsfahrt während der Zeitdauer T4 einem typischen Rangierbetrieb des Flurförderzeugs 10 entsprechen, wobei durch die gleichzeitige Betätigung der beiden Pedale 34 und 36 eine äußerst präzise Einstellung des gewünschten momentanen Fahrsollwerts und damit auch der Geschwindigkeit in Richtung vorwärts oder rückwärts erzielt werden kann.

## Patentansprüche

1. Doppelpedalsystem (30) für ein Flurförderzeug (10), umfassend:
- ein erstes federrückgestelltes Pedal (34);
- ein zweites federrückgestelltes Pedal (36);
wobei das erste und das zweite federrückgestellte Pedal (34, 36) mechanisch unabhängig voneinander vorgesehen sind und jeweils mit einer Einrichtung (42) zum elektronischen Erfassen des momentanen Betätigungswegs des entsprechenden Pedals (34, 36) versehen sind; und
eine Steuereinheit, welche mit den Einrichtungen (42) zum elektronischen Erfassen der Betätigungswege der beiden Pedale (34, 36) betriebsmäßig gekoppelt und dazu eingerichtet ist, aus den momentanen Betätigungswegen der beiden Pedale (34, 36) einen Fahrsollwert zu bestimmen,
**dadurch gekennzeichnet, dass**
die Steuereinheit dazu eingerichtet ist, den Fahrsollwert mittels einer Differenzbildung zwischen den beiden momentanen Betätigungswegen der Pedale (34, 36) zu bestimmen.

2. Doppelpedalsystem (30) nach Anspruch 1, wobei die Steuereinheit ferner dazu eingerichtet ist, bei der Bestimmung des Fahrsollwerts abhängig von den momentanen Betätigungswegen der beiden Pedale (34, 36) eine Fahrsollrichtung zu bestimmen.

3. Doppelpedalsystem (30) nach einem der vorhergehenden Ansprüche,
wobei die Steuereinheit ferner dazu eingerichtet ist, bei einer gleichzeitigen Auslenkung beider Pedale (34, 36) einen Vorgang zur Verringerung des Geschwindigkeitsbetrags des Flurförderzeugs (10) anzuweisen.

4. Flurförderzeug (10), insbesondere elektrisch betriebenes Flurförderzeug, umfassend einen Fahrersitz (24) und in einem Fußraum (22a) vor dem Fahrersitz (24) angebracht ein Doppelpedalsystem (30) nach einem der vorhergehenden Ansprüche, wobei die Steuereinheit des Doppelpedalsystems (30) mit einer Steuereinrichtung eines Antriebsmotors des Flurförderzeugs (10) betriebsmäßig gekoppelt oder mit ihr integriert ist.

5. Flurförderzeug (10) nach dem vorhergehenden Anspruch, wobei das erste (34) der beiden Pedale auf der rechten Seite bezüglich einer Längs-Mittelachse des Fahrersitzes (24) vorgesehen ist und das zweite der beiden Pedale (36) auf der linken Seite bezüglich einer Längs-Mittelachse des Fahrersitzes (24) vorgesehen ist.

6. Flurförderzeug (10) nach Anspruch 5, wobei die beiden Pedale (34, 36) jeweils derart schräg bezüglich der Längs-Mittelachse des Fahrersitzes (24) angeordnet sind, dass sie sich in Richtung weg von dem Fahrersitz (24) weg von der Längs-Mittelachse erstrecken.

7. Flurförderzeug (10) nach einem der Ansprüche 4 bis 6, ferner umfassend eine Vorrichtung zum induktiven Abbremsen des Flurförderzeugs (10), wobei die Steuereinheit des Doppelpedalsystems (30) und die Vorrichtung zum induktiven Abbremsen derart zusammenwirken, dass bei einer gleichzeitigen Auslenkung beider Pedale (34, 36) die Vorrichtung zum induktiven Abbremsen betätigt wird.

8. Verfahren zum Betreiben eines Doppelpedalsystems (30) nach einem der Ansprüche 1 bis 3, umfassend die Schritte:
- Erfassen der momentanen Betätigungswege der beiden Pedale (34, 36); und
- Bestimmen eines Fahrsollwerts aus den momentanen Betätigungswegen der beiden Pedale (34, 36).

9. Verfahren nach dem vorhergehenden Anspruch, wobei die Bestimmung des Fahrsollwerts aus den momentanen Betätigungswegen der beiden Pedale (34, 36) ein Bestimmen einer Fahrsollrichtung umfasst.

10. Verfahren nach Anspruch 8 oder 9, wobei das Bestimmen des Fahrsollwerts ein Ermitteln einer Differenz zwischen den beiden momentanen Betätigungswegen der Pedale (34, 36) und ein Skalieren der ermittelten Differenz hinsichtlich einer maximal abrufbaren Antriebsleistung des Flurförderzeugs (10) umfasst.

## Claims

1. Double pedal system (30) for an industrial truck (10), comprising:
- a first spring-reset pedal (34);
- a second spring-reset pedal (36);
wherein the first and the second spring-reset pedals (34, 36) are provided so as to be mechanically independent of one another, and are each provided with a device (42) for electronically capturing the current actuation path of the corresponding pedal (34, 36); and
a control unit which is operatively coupled to the devices (42) for electronically capturing the actuation paths of the two pedals (34, 36), and is designed to determine a travel target value from the current actuation paths of the two pedals (34, 36),
**characterized in that**
the control unit is designed to determine the travel target value by calculating the difference between the two current actuation paths of the pedals (34, 36).

2. Double pedal system (30) according to claim 1, wherein the control unit is furthermore designed to determine a travel target direction, depending on the current actuation paths of the two pedals (34, 36), during the determination of the travel target value.

3. Double pedal system (30) according to any of the preceding claims,
wherein the control unit is furthermore designed to order a process for reducing the speed value of the industrial truck (10) in the event of both pedals (34, 36) being deflected simultaneously.

4. Industrial truck (10), in particular an electrically operated industrial truck, comprising a driver's seat (24) and a double pedal system (30) according to any of the preceding claims that is attached in a footwell (22a) in front of the driver's seat (24), wherein the control unit of the double pedal system (30) is operatively coupled to, or integrated with, a controller of a drive motor of the industrial truck (10).

5. Industrial truck (10) according to the preceding claim, wherein the first (34) of the two pedals is provided on the right-hand side with respect to a longitudinal central axis of the driver's seat (24), and the second of the two pedals (36) is provided on the left-hand side with respect to a longitudinal central axis of the driver's seat (24).

6. Industrial truck (10) according to claim 5, wherein the two pedals (34, 36) are in each case arranged obliquely with respect to the longitudinal central axis of the driver's seat (24), such that they extend away from the longitudinal central axis, in the direction away from the driver's seat (24).

7. Industrial truck (10) according to any of claims 4 to 6, further comprising a device for inductive braking of the industrial truck (10), wherein the control unit of the double pedal system (30) and the device for inductive braking interact such that, in the event of both pedals (34, 36) being deflected simultaneously, the device for inductive braking is actuated.

8. Method for operating a double pedal system (30) according to any of claims 1 to 3, comprising the steps of:
- capturing the current actuation paths of the two pedals (34, 36); and
- determining a travel target value from the current actuation paths of the two pedals (34, 36).

9. Method according to the preceding claim, wherein the determination of the travel target value from the current actuation paths of the two pedals (34, 36) comprises determining a travel target direction.

10. Method according to either claim 8 or claim 9, wherein determining the travel target value comprises calculating a difference between the two current actuation paths of the pedals (34, 36) and scaling the calculated difference with respect to a maximally available drive power of the industrial truck (10).

## Revendications

1. Système à double pédale (30) pour un chariot de manutention (10) comprenant :
- une première pédale à ressort de rappel (34) ;
- une deuxième pédale à ressort de rappel (36),
dans lequel lesdites première et deuxième pédales à ressort de rappel (34, 36) sont mécaniquement indépendantes l'une de l'autre et chacune est pourvue d'un dispositif (42) pour détecter électroniquement la course d'actionnement instantanée de la pédale correspondante (34, 36) ; et
une unité de commande qui est couplée de manière opérationnelle aux dispositifs (42) pour détecter électroniquement les courses d'actionnement des deux pédales (34, 36) et est configurée pour déterminer une valeur définie de déplacement à partir des courses d'actionnement instantanées des deux pédales (34, 36), **caractérisé en ce que**
l'unité de commande est configurée pour déterminer la valeur définie de déplacement au moyen d'une formation de différence entre les deux courses d'actionnement instantanées des pédales (34, 36).

2. Système à double pédale (30) selon la revendication 1, dans lequel l'unité de commande est en outre configurée pour déterminer une direction définie de déplacement lors de la détermination de la valeur définie de déplacement en fonction des courses d'actionnement instantanées des deux pédales (34, 36).

3. Système à double pédale (30) selon l'une quelconque des revendications précédentes,
dans lequel l'unité de commande est en outre configurée pour ordonner une opération de réduction de la vitesse du chariot de manutention (10) lorsque les deux pédales (34, 36) sont défléchies simultanément.

4. Chariot de manutention (10), en particulier chariot de manutention à opération électrique, comprenant un siège du conducteur (24) et, monté dans un espace pour les pieds (22a) devant le siège du conducteur (24), un système à double pédale (30) selon l'une des revendications précédentes, dans lequel l'unité de commande du système à double pédale (30) est couplée fonctionnellement à ou intégrée à un dispositif de commande d'un moteur d'entraînement du chariot de manutention (10).

5. Chariot de manutention (10) selon la revendication précédente, dans lequel la première (34) des deux pédales est prévue sur le côté droit par rapport à un axe central longitudinal du siège du conducteur (24) et la seconde des deux pédales (36) est prévue sur le côté gauche par rapport à un axe central longitudinal du siège du conducteur (24).

6. Chariot de manutention (10) selon la revendication 5, dans lequel les deux pédales (34, 36) sont chacune disposées obliquement par rapport à l'axe central longitudinal du siège du conducteur (24) de telle sorte qu'elles s'étendent dans une direction d'éloignement du siège du conducteur (24) et de l'axe central longitudinal.

7. Chariot de manutention (10) selon l'une quelconque des revendications 4 à 6, comprenant en outre un dispositif de freinage par induction du chariot de manutention (10), dans lequel l'unité de commande du système à double pédale (30) et le dispositif de freinage par induction coopèrent de telle sorte que lorsque les deux pédales (34, 36) sont défléchies simultanément, le dispositif de freinage par induction est actionné.

8. Procédé pour opérer un système à double pédale (30) selon l'une quelconque des revendications 1 à 3, comprenant les étapes suivantes :
- détecter les courses d'actionnement instantanées des deux pédales (34, 36) ; et
- déterminer une valeur définie de déplacement à partir des courses d'actionnement instantanées des deux pédales (34, 36).

9. Procédé selon la revendication précédente, dans lequel la détermination de la valeur définie de déplacement à partir des courses d'actionnement instantanées des deux pédales (34, 36) comprend une détermination d'une direction de déplacement définie.

10. Procédé selon la revendication 8 ou 9, dans lequel la détermination de la valeur définie de déplacement comprend la détermination d'une différence entre les deux courses d'actionnement instantanés des pédales (34, 36) et la mise à l'échelle de la différence déterminée par rapport à une puissance d'entraînement réalisable maximale du chariot de manutention (10).
